# EUROPÄISCHE PATENTSCHRIFT

(11) **EP 2 885 805 B1**
(45) Veröffentlichungstag und Bekanntmachung des Hinweises auf die Patenterteilung: **11.01.2017**
(21) Anmeldenummer: 13750866.9
(22) Anmeldetag: 09.08.2013
(51) Int. Cl.: H01H 85/32

(54) **SICHERUNGSAUSFALLANZEIGE**
FUSE FAILURE DISPLAY
INDICATEUR DE DÉFAILLANCE DE FUSIBLE

(30) Priorität: 16.08.2012 DE 102012107525
(43) Veröffentlichungstag der Anmeldung: 24.06.2015
(73) Patentinhaber: Phoenix Contact GmbH & Co. KG, 32825 Blomberg (DE)
(72) Erfinder: HUDETZ, Hans-Peter, 31789 Hameln (DE)
(74) Vertreter: Michalski Hüttermann & Partner Patentanwälte mbB
(86) Internationale Anmeldenummer: PCT/EP2013/066760
(87) Internationale Veröffentlichungsnummer: WO 2014/026933

(56) Entgegenhaltungen:
- DE-A1- 2 831 139
- US-A1- 2009 213 505
- US-A1- 2009 273 314

## Beschreibung

Die Erfindung betrifft eine Schaltung zur Sicherungsausfallanzeige für eine Überwachung des Auslöse-Status einer Sicherung, wobei zur Anzeige des Auslöse-Status der Sicherung eine Leuchtdiode vorgesehen ist.

Die Erfindung ist für einen Einsatz zur Überwachung von Sicherungen sowohl im Gleichstrombetrieb als auch im Wechselstrombetrieb vorgesehen. Sie ist geeignet im Weitbereichseinsatz Sicherungen im Niederspannungsbereich von wenigen Volt bis einigen hundert Volt zu überwachen. Bei entsprechender Dimensionierung der zu verwendenden Halbleiterkomponenten ist aber auch der Einsatz im Hochspannungsbereich grundsätzlich möglich.

Die Anforderung, den Status von Sicherungen optisch oder elektronisch überwachen zu können, ist vielfach begründet. Kleingerätesicherungen sind oftmals schlecht zugänglich, zudem ist der Zustand eines Schmelzdrahtes einer Feinsicherung oftmals schwer zu erkennen. In einem anderen Leistungsbereich sind beispielsweise die Stellungen der Leitungsschutzschalter einer Hausverteilung bei Dunkelheit nicht zu erkennen. Und in einem weiteren Einsatzbereich erfordert eine elektrische Steuerungs- oder Überwachungsanlage gegebenenfalls den Status einer Sicherung als Sensorinformation zur Fehleranzeige oder zum Einleiten von Maßnahmen.

Entsprechend der individuellen Problemstellung sind aus dem Stand der Technik auf die jeweilige Situation zugeschnittene, oftmals aufwändige Lösungen bekannt.

Das Dokument DE 2831139 offenbart die Merkmale des Oberbegriffs des Anspruchs 1.

Aufgabe der vorliegenden Erfindung ist es, eine einfache und preisgünstige, in einem weiten Spannungsbereich einsetzbare und auf kleinem Raum realisierbare Schaltung zur Sicherungsüberwachung anzugeben, die sowohl für den Gleichstrom- als auch den Wechselstrombetrieb geeignet ist.

Die Lösung der Aufgabe erfolgt erfindungsgemäß durch die Merkmale des unabhängigen Anspruchs. Vorteilhafte Ausgestaltungen der Erfindung sind in den Unteransprüchen angegeben.

Erfindungsgemäß ist damit eine Schaltungsanordnung zur Sicherungsausfallanzeige für eine Überwachung des Auslöse-Status einer Sicherung vorgesehen, welche zur Anzeige des Auslöse-Status der Sicherung eine Leuchtdiode aufweist, die in einem Strompfad parallel zu der Sicherung angeordnet ist, wobei bei nicht ausgelöster Sicherung dieser parallele Strompfad im Verhältnis zu dem Widerstand über die Sicherung einen derart hohen Widerstand aufweist, dass der Strom über diesen Strompfad zum Betreiben der Leuchtdiode nicht ausreicht, und wobei bei ausgelöster Sicherung dieser parallele Strompfad im Verhältnis zu dem Widerstand über die Sicherung einen derart niedrigen Widerstand aufweist, dass der Strom über diesen Strompfad zum Betreiben der Leuchtdiode ausreicht, wobei ferner eine Strombegrenzungseinrichtung zur Begrenzung des Stroms über die Leuchtdiode und eine Spannungsbegrenzungseinrichtung zur Begrenzung der Spannung über die ausgelöste Sicherung vorgesehen ist, wobei bei nicht ausgelöster Sicherung zur Erzielung des hohen Widerstands des parallelen Strompfades ein Feldeffekttransistor und ein Widerstand in Reihe vorgesehen sind und bei ausgelöster Sicherung zur Einrichtung der Strombegrenzungseinrichtung in dem parallelen Strompfad derselbe Widerstand vorgesehen ist, um eine Steuerspannung für den Feldeffekttransistor in dem parallelen Strompfad mit der Leuchtdiode auszubilden, von der der Sperrzustand des Feldeffekttransistor abhängig ist.

Mit anderen Worten ist vorgesehen, dass nach einem Ausfall der zu überwachenden Sicherung der über die Sicherung abgesicherte Stromkreis über den parallelen Strompfad der Sicherungsausfallanzeige weiterhin geschlossen bleibt, wobei eine Strombegrenzungseinrichtung den Strom über die Sicherungsausfallanzeige begrenzt und damit gleichzeitig eine Leuchtdiode betreibt.

Die Anordnung weist dabei mehrere Vorteile auf.
Ein erster Vorteil besteht darin, dass die Schaltung nur sehr wenige Bauelemente benötigt. Sie ist damit kostengünstig und mit geringem Raumbedarf zu realisieren. In vielen Sicherungsanwendungen wird sie damit in bestehende Gehäuse integrierbar sein.

Ein weiterer Vorteil besteht darin, dass die Schaltung unabhängig von der Betriebsspannung verwendbar ist. Lediglich begrenzt durch die Spannungsfestigkeit der Halbleiter regelt der Feldeffekttransistor den Strom durch den parallelen Strompfad auch bei hohen Spannungen zwischen den Anschlusskontakten der Sicherungsausfallanzeige auf eine voreingestellte Größe herunter, so dass die Leuchtdiode nicht zerstört wird.

Die Anordnung ist sowohl für den Gleichstrombetrieb als auch den Wechselstrombetrieb geeignet, wobei bei letzterem aufgrund der verwendeten Leuchtdiode vorzugsweise eine Halbwellengleichrichtung vorgesehen ist.

Vorteilhaft weist die Schaltung einen Varistor auf, der in einem weiteren parallelen Strompfad parallel zur Sicherung angeordnet ist.

Der Vorteil eines solchen spannungsabhängigen Widerstands ist, dass sein Widerstand bei Anliegen einer vorgegebenen Schwellspannung abrupt sinkt und er damit leitend wird. Dabei muss die vorgegebene Schwellspannung oberhalb der Betriebsspannung liegen, so dass der Varistor nur für Spannungsspitzen oberhalb der Betriebsspannung leitend wird und dadurch den parallelen Strompfad mit dem Feldeffekttransistor schützt.

Vorteilhaft weist die Schaltung zur Spannungsbegrenzungseinrichtung ferner einen Kondensator auf, der in einem weiteren parallelen Strompfad parallel zur Sicherung angeordnet ist.

Bei nicht ausgelöster Sicherung sind die Pole des Kondensators über die Sicherung kurzgeschlossen, so dass der Kondensator vollständig entladen ist. Aufgrund von Induktivitäten in dem von der Sicherung abgesicherten Stromkreises könnte es bei dem Auslösen der Sicherung zu Spannungsspitzen kommen, sofern diese nicht von dem Kondensator kompensiert würden. Vorteilhaft weist die Schaltung daher sowohl einen Varistor als auch einen Kondensator auf.

Vorteilhaft ist die Schaltung ferner derart ausgebildet, dass die Reihenschaltung zwei zusätzliche Dioden aufweist, die die Anordnung aus Feldeffekttransistor, Widerstand und Leuchtdiode beispielsweise umrahmen.

Auch diese bieten dem von ihnen umrahmten Feldeffekttransistor zusätzlichen Schutz gegen Überspannung. Desweiteren sind sie bei Wechselstrombetrieb geeignet, die Halbwellengleichrichtung zu übernehmen und so die Leuchtdiode zu entlasten.

Vorteilhaft ist die Schaltung weiterhin derart ausgebildet, dass die Leuchtiode Teil eines Optokoppler ist oder die Reihenschaltung zusätzlich einen Optokoppler aufweist, über den eine Rückmeldung oder eine Kopplung an eine Auswerteelektronik erfolgen kann.

Dabei weist ein Optokoppler den Vorteil der galvanischen, Trennung von dem von der Sicherung abgesicherten Stromkreis auf, so dass beispielsweise mögliche Spannungsspitzen nicht auf eine nachgeschaltete Auswerteelektronik einwirken können.

Vorteilhaft ist der Feldeffekttransistor als MOSFET (Metal Oxide Semiconductor Field Effect Transistor) ausgebildet, der einen negativen Temperaturkoeffizienten aufweist, so dass sein Widerstand steigt, sofern er von einem zu hohem Strom überlastet wird.

Zur Ausbildung der Stromregelung ist beispielsweise ein selbstleitender n-Kanal-MOSFET geeignet, der den Source-Drain-Kanal mit zunehmender (negativer) Gate-Spannung sperrt. Bei einem Strom durch den Widerstand der Schaltung fällt über den Widerstand eine solche als Steuerspannung geeignete Spannung an.

Vorteilhaft ist ferner zwischen Source und Drain des Feldeffekttransistors eine Schutzdiode angeordnet, wobei der Feldeffekttransistor so ausgebildet sein kann, dass er diese Schutzdiode beinhaltet.

Aufgrund der hohen Anfälligkeit gegenüber Überspannungsspitzen, auch durch Elektrostatik, kann eine solche Diode den Feldeffekttransistor zusätzlich schützen. Vorteilhaft wird die Schutzdiode als Zenerdiode ausgebildet, welche ab einer vorbestimmten Schwellenspannung entgegen der Sperrrichtung leitet. Vorteilhaft kann diese in das Bauelement des Feldeffekttransistors integriert sein.

In einer vorteilhaften Ausbildung umfasst die erfindungsgemäße Schaltung einen Varistor, einen Kondensator, einen Widerstand, einen Feldeffekttransistor, eine Leuchtdiode und zwei Dioden sowie optional einen Optokoppler. In dieser Ausgestaltung wird ein gutes Verhältnis von schaltungstechnischem Aufwand zu zuverlässiger Funktionalität und Raumbedarf erzielt.

Vorteilhaft weist eine Sicherungseinrichtung eine Sicherungsausfallsanzeige mit den zuvor beschriebenen Merkmalen auf. Dabei kann es sich beispielsweise um eine Reihensicherungsklemme, einen Leitungsschutzschalter, eine Einrichtung für eine G-Sicherung oder eine Halterung für eine Feingerätesicherung handeln.

Nachfolgend wird die Erfindung unter Bezugnahme auf die anliegende Zeichnung anhand bevorzugter Ausführungsformen näher erläutert.

Es zeigen
- Fig. 1: eine Schaltung zur Sicherungsausfallanzeige gemäß einer bevorzugten Ausführungsform der Erfindung und
- Fig. 2: eine Reihensicherungsklemme mit einer Sicherungsausfallanzeige zwecks Überwachung des Auslöse-Status einer Sicherung gemäß einer bevorzugten Ausführungsform der Erfindung,

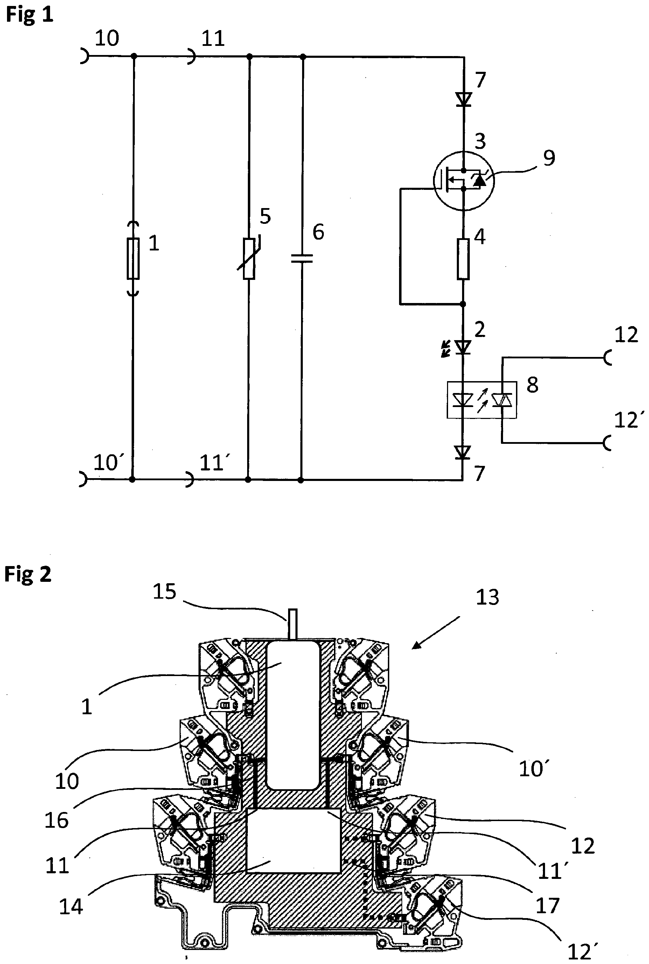

Die Figur 1 zeigt eine Schaltung zur Sicherungsausfallanzeige gemäß einer bevorzugten Ausführungsform der Erfindung.

Der über die Sicherung 1 abzusichernde Stromkreis kann über die Anschlusskontakte 10, 10' mit der Sicherung 1 verbunden werden. Die Schaltung der Sicherungsausfallanzeige ist über die Anschlusskontakte 11, 11' der Sicherungsausfallanzeige zu der Sicherung 1 parallelgeschaltet.

Die Schaltung der Sicherungsausfallanzeige weist drei parallele Strompfade zwischen ihren Anschlusskontakten 11 und 11' auf. Ein erster verläuft über den Varistor 5, ein zweiter über den Kondensator 6 und ein dritter über eine Reihenschaltung aus zwei Dioden,7, einem n-Kanal-Feldeffekttransistor 3 mit integrierter Schutzdiode 9, einem Widerstand 4, einer Leuchtdiode 2 und einem Optokoppler 8. Sofern nicht näher spezifiziert, ist unter der Bezeichnung des parallelen Strompfads im Folgenden die letztgenannte Reihenschaltung zu verstehen.

Die Sensoranschlüsse bzw. Anschlusskontakte für die Rückmeldung 12, 12' des Optokoppler 8 sind von dem abzusichernden Stromkreis galvanisch getrennt und werden von dem Optokoppler 8 geschaltet. Bei nicht ausgelöster Sicherung wird der abzusichernde Stromkreis sowohl über die Sicherung 1 als auch über den parallelen Strompfad der Sicherungsausfallanzeige geschlossen. Dabei stellen Sicherung 1 und Sicherungsausfallanzeige aus Sicht des abzusichernden Stromkreises einen Stromteiler dar. Der Strom verteilt sich in umgekehrt proportionaler Weise zum Widerstand auf die Äste der Sicherung und der Stromausfallanzeige.

Da der Widerstand der nicht ausgelösten Sicherung 1 üblicherweise deutlich unter 1 Ohm, nahe 0 Ohm liegt, weist der parallele, mit dem Widerstand 4 behaftete Strompfad zwangsläufig einen vergleichbar hohen Widerstand auf. Der Strom fließt bei nicht ausgelöster Sicherung 1 quasi ausschließlich über die nahezu widerstandsfreie Sicherung 1. Die Anschlusskontakte der Sicherung 10, 10' sowie der Sicherungsausfallanzeige 11, 11' liegen auf gleichem Potential, es fließt kein ausreichend hoher Strom durch den parallelen Strompfad, um die die Leuchtdiode 2 der Sicherungsausfallanzeige betreiben zu können.

Die Anschlüsse des Varistors 5 liegen auf gleichem Potential, so dass sich auch dieser mangels anliegender Spannung im Sperrzustand befindet. Ebenso stellt der Kondensator 6 einen Isolator dar, sofern beide Pole auf gleichem Potential liegen. Befindet sich die Sicherung 1 im ausgelösten Zustand, stellt sie einen Isolator mit nahezu unendlichem Widerstand dar. Der Stromkreis ist in diesem Fall weiterhin geschlossen, nunmehr aber über den parallelen Strompfad der Sicherungsausfallanzeige.

Der Feldeffekttransistor 3 ist als selbstleitender n-Kanal-Feldeffekttransistor ausgeführt, so dass er bereits ohne Anliegen einer Gate-Spannung leitet. Im Moment des Sicherungsausfalls befindet er sich daher im Leitzustand ohne nennenswerten Widerstand.

Abgesehen von den Durchlasswiderständen der Dioden 2, 7 und 8 bestimmt sich der Widerstand des parallelen Strompfads zunächst durch den Widerstand 4. Mit, durch den Ausfall der Sicherung 1 bedingtem, zunehmend steigendem Strom durch den Widerstand 4, fällt über den Widerstand 4 eine Spannung ab, welche dem Feldeffekttransistor 3 als negative Steuerspannung zwischen Gate und Source zugeführt wird. Der Feldeffekttransistor 3 geht damit soweit in den Sperrzustand über, bis sich der durchfließende Strom auf einen durch den Widerstandswert des Widerstands 4 vorbestimmbaren Wert eingeregelt hat.

Der Strom durch den parallelen Strompfad der Sicherungsausfallanzeige ist dadurch in einem weiten Spannungsbereich unabhängig von der Betriebsspannung des abzusichernden Stromkreises. Übersteigt die an den Anschlusskontakten 11, 11' anliegende Spannung eine vorgegebene Schwellspannung des Varistors 5, so geht dieser in den Leitzustand über, wodurch die Spannung zwischen den Anschlusskontakten 11 und 11' abgebaut wird. Ebenso ist der Kondensator 6 geeignet, die Spannung zwischen den Anschlusskontakten 11 und 11' stabil zu halten, so dass der parallele Strompfad vor Spannungsspitzen geschützt wird.

Figur 2 zeigt eine Ausführung einer Reihensicherungsklemme 13 mit einer erfindungsgemäßen Sicherungsausfallanzeige. Die Schaltung der Sicherungsausfallanzeige ist auf einer Leiterplatte 14 angeordnet, welche zusammen mit der Sicherung 1 in die Reihensicherungsklemme 13 integriert ist.

Die Reihensicherungsklemme 13 weist mehrere Anschlusskontakte 10, 10', 12, 12' auf, die als Anschlussklemmen, zum Beispiel als Push-In, ausgeführt sein können. Über die Anschlusskontakte 10, 10' erfolgt der Anschluss des abzusichernden Stromkreises. Über die Anschlusskontakte 12, 12' erfolgt optional der Anschluss der Rückmeldung. Dabei kann unter Aufgabe der galvanischen Trennung auf einen der Anschlusskontakte 12 oder 12'verzichtet werden.

Die Anschlusskontakte 10, 10' sind über die interne Verdrahtung der Sicherungsausfallanzeige mit der Sicherung 1 und den Anschlusskontakten der Sicherungsausfallanzeige 11, 11' verbunden. Die Anschlusskontakte 12, 12' eines optionalen Rückmeldekreises sind über die Verdrahtung der Rückmeldung 17 mit dem ebenfalls optionalen Optokoppler 8 der Schaltung verbunden. Die Sicherung 1 kann mechanisch über die Drehvorrichtung 15 betätigt werden.

**Bezugszeichenliste**

| | |
|---|---|
| Sicherung | 1 |
| Leuchtdiode | 2 |
| Feldeffekttransistor | 3 |
| Widerstand | 4 |
| Varistor | 5 |
| Kondensator | 6 |
| Diode | 7 |
| Optokoppler | 8 |
| Schutzdiode | 9 |
| Anschlusskontakt Sicherung | 10, 10' |
| Anschlusskontakt Sicherungsausfallanzeige | 11, 11' |
| Anschlusskontakt Rückmeldung | 12, 12' |
| Reihensicherungsklemme mit Sicherungsausfallanzeige | 13 |
| Leiterplatte | 14 |
| Drehvorrichtung | 15 |
| Verdrahtung Sicherungsausfallanzeige | 16 |
| Verdrahtung Rückmeldung | 17 |

## Patentansprüche

1. Schaltung zur Sicherungsausfallanzeige für eine Überwachung des Auslöse-Status einer Sicherung (1), wobei zur Anzeige des Auslöse-Status der Sicherung (1) eine Leuchtdiode (2) vorgesehen ist, die in einem Strompfad parallel zu der Sicherung (1) angeordnet ist, wobei bei nicht ausgelöster Sicherung (1) dieser parallele Strompfad im Verhältnis zu dem Widerstand über die Sicherung (1) einen derart hohen Widerstand aufweist, dass der Strom über diesen Strompfad zum Betreiben der Leuchtdiode (2) nicht ausreicht, und wobei bei ausgelöster Sicherung (1) dieser parallele Strompfad im Verhältnis zu dem Widerstand über die Sicherung (1) einen derart niedrigen Widerstand aufweist, dass der Strom über diesen Strompfad zum Betreiben der Leuchtdiode (2) ausreicht, wobei ferner eine Strombegrenzungseinrichtung zur Begrenzung des Stroms über die Leuchtdiode (2) und eine Spannungsbegrenzungseinrichtung zur Begrenzung der Spannung über die ausgelöste Sicherung (1) vorgesehen ist, **dadurch gekennzeichnet, dass** bei nicht ausgelöster Sicherung (1) zur Erzielung des hohen Widerstands des parallelen Strompfades ein Feldeffekttransistor (3) und ein Widerstand (4) in Reihe vorgesehen sind und bei ausgelöster Sicherung (1) zur Einrichtung der Strombegrenzungseinrichtung in dem parallelen Strompfad derselbe Widerstand (4) vorgesehen ist, um eine Steuerspannung für den Feldeffekttransistor (3) in dem parallelen Strompfad mit der Leuchtdiode (2) auszubilden, von der der Sperrzustand des Feldeffekttransistors (3) abhängig ist.

2. Schaltung nach Anspruch 1, **dadurch gekennzeichnet, dass** die Spannungsbegrenzungseinrichtung einen Varistor (5) aufweist, der in einem weiteren parallelen Strompfad parallel zur Sicherung (1) angeordnet ist.

3. Schaltung nach einem der vorherigen Ansprüche, **dadurch gekennzeichnet, dass** die Spannungsbegrenzungseinrichtung einen Kondensator (6) aufweist, der in einem weiteren parallelen Strompfad parallel zur Sicherung (1) angeordnet ist.

4. Schaltung nach einem der vorherigen Ansprüche, **dadurch gekennzeichnet, dass** die Spannungsbegrenzungseinrichtung einen Varistor (5) und einen Kondensator (6) aufweist, vorzugsweise aus dem Varistor (5) und dem Kondensator (6) besteht, wobei der Varistor (5)und der Kondensator (6) parallel zur Sicherung (1) angeordnet sind.

5. Schaltung nach einem der vorherigen Ansprüche, **dadurch gekennzeichnet, dass** die Reihenschaltung zwei zusätzliche Dioden (7) aufweist, die die Anordnung aus Feldeffekttransistor (3), Widerstand (4) und Leuchtdiode (2) umrahmen.

6. Schaltung nach einem der vorherigen Ansprüche, **dadurch gekennzeichnet, dass** die Leuchtiode (2) Teil eines Optokoppler (8) ist oder die Reihenschaltung zusätzlich einen Optokoppler (8) aufweist, über den eine Rückmeldung oder eine Kopplung an eine Auswerteelektronik erfolgen kann.

7. Schaltung nach einem der vorherigen Ansprüche, **dadurch gekennzeichnet, dass** der Feldeffekttransistor (3) als MOSFET ausgebildet ist.

8. Schaltung nach einem der vorherigen Ansprüche, **dadurch gekennzeichnet, dass** zwischen Source und Drain des Feldeffekttransistor (3) eine Schutzdiode (9) angeordnet ist, wobei der Feldeffekttransistor (3) so ausgebildet ist, dass er diese Schutzdiode (9) beinhaltet.

9. Schaltung nach einem der vorherigen Ansprüche, **dadurch gekennzeichnet, dass** die Schaltung maximal einen Varistor (5), einen Kondensator (6), einen Widerstand (4), einen Feldeffekttransistor (3), eine Leuchtdiode (2) sowie Dioden (7) und einen Optokoppler (8) umfasst.

10. Sicherungseinrichtung (13), die eine Sicherungsausfallsanzeige nach einem der vorherigen Ansprüche aufweist.

## Claims

1. A circuit for fuse failure display for monitoring the trip status of a fuse (1), wherein a light-emitting diode (2) is provided in order to display the trip status of the fuse (1) and is arranged in a current path parallel to the fuse (1), wherein, if the fuse (1) is not tripped, this parallel current path has a high resistance in relation to the resistance across the fuse (1), such that the current over this current path is insufficient for operation of the light-emitting diode (2), and wherein, if the fuse (1) is tripped, this parallel current path has a low resistance in relation to the resistance across the fuse (1), such that the current over this current path is sufficient for operation of the light-emitting diode (2), wherein a current-limiting device for limiting the current across the light-emitting diode (2) and a voltage-limiting device for limiting the voltage across the tripped fuse (1) are also provided, **characterised in that,** when the fuse (1) is not tripped, a field-effect transistor (3) and a resistor (4) are provided in series in order to attain the high resistance of the parallel current path and, when the fuse (1) is tripped, the same resistor (4) is provided in order to arrange the current-limiting device in the parallel current path so as to provide a control voltage for the field-effect transistor (3) in the parallel current path with the light-emitting diode (2), the blocking state of the field-effect transistor (3) being dependent on said control voltage.

2. The circuit according to claim 1, **characterised in that** the voltage-limiting device comprises a varistor (5) that is arranged in a further parallel current path parallel to the fuse (1).

3. The circuit according to either one of the preceding claims, **characterised in that** the voltage-limiting device comprises a capacitor (6) that is arranged in a further parallel current path parallel to the fuse (1).

4. The circuit according to any one of the preceding claims, **characterised in that** the voltage-limiting device comprises a varistor (5) and a capacitor (6), preferably consists of the varistor (5) and the capacitor (6), wherein the varistor (5) and the capacitor (6) are arranged parallel to the fuse (1).

5. The circuit according to any one of the preceding claims, **characterised in that** the series circuit comprises two additional diodes (7), which are arranged on either side of the arrangement formed of the field-effect transistor (3), resistor (4), and light-emitting diode (2).

6. The circuit according to any one of the preceding claims, **characterised in that** the light-emitting diode (2) is part of an optocoupler (8), or the series circuit additionally comprises an optocoupler (8), via which a feedback or a coupling to an evaluation electronics unit can be provided.

7. The circuit according to any one of the preceding claims, **characterised in that** the field-effect transistor (3) is formed as a MOSFET.

8. The circuit according to any one of the preceding claims, **characterised in that** a protective diode (9) is arranged between the source and drain of the field-effect transistor (3), wherein the field-effect transistor (3) is formed such that it contains this protective diode (9).

9. The circuit according to any one of the preceding claims, **characterised in that** the circuit comprises at most one varistor (5), a capacitor (6), a resistor (4), a field-effect transistor (3), a light-emitting diode (2), and also diodes (7) and an optocoupler (8).

10. A fuse device (13), which has a fuse failure display according to any one of the preceding claims.

## Revendications

1. Commutateur pour l'indication de la défaillance d'un fusible pour une surveillance de l'état de déclenchement d'un fusible (1), où, pour l'indication de l'état de déclenchement du fusible (1), une diode électroluminescente (2) est prévue, qui est disposée sur un trajet de courant parallèle au fusible (1), où, dans le cas d'un fusible (1) non déclenché, ce trajet de courant parallèle présente une résistance si élevée en comparaison avec la résistance de passage du fusible (1) que le courant passant par ce trajet de courant ne suffit pas à faire fonctionner la diode électroluminescente (2), et où, pour un fusible (1) déclenché, ce trajet de courant parallèle présente une résistance si faible en comparaison avec la résistance de passage du fusible (1) que le courant passant par ce trajet de courant suffit à faire fonctionner la diode électroluminescente (2), où, en outre, un dispositif de limitation du courant, pour la limitation du courant de passage sur la diode électroluminescente (2), et un
dispositif de limitation de la tension, pour la limitation de la tension de passage sur le fusible (1) déclenché sont prévus, **caractérisé en ce que,** dans le cas d'un fusible (1) non déclenché, un transistor à effet de champ (3) et une résistance (4) en série sont prévus pour atteindre la résistance élevée du trajet de courant parallèle, et pour un fusible (1) déclenché, pour la mise en place du dispositif de limitation de courant dans le trajet de courant parallèle, la même résistance (4) est prévue, afin de former une tension de commande pour le transistor à effet de champ (3) dans le trajet de courant parallèle avec la diode électroluminescente (2), de laquelle l'état de blocage du transistor à effet de champ (3) est dépendant.

2. Commutateur selon la revendication 1, **caractérisé en ce que** le
dispositif de limitation de la tension présente une varistance (5) qui est disposée sur un autre trajet de courant parallèle parallèlement par rapport au fusible (1).

3. Commutateur selon l'une des revendications précédentes, **caractérisé en ce que** le dispositif de limitation de la tension présente un condensateur (6), qui est disposé dans un autre trajet de courant parallèle parallèlement par rapport au fusible (1).

4. Commutateur selon l'une des revendications précédentes, **caractérisé en ce que** le dispositif de limitation de la tension présente une varistance (5) et un condensateur (6), de préférence est constitué de la varistance (5) et du condensateur (6), où la varistance (5) et le condensateur (6) sont disposés en parallèle par rapport au fusible (1).

5. Commutateur selon l'une des revendications précédentes, **caractérisé en ce que** le commutateur en série présente deux diodes (7) supplémentaires qui encadrent l'arrangement à base du transistor à effet de champ (3), la résistance (4) et la diode électroluminescente (2).

6. Commutateur selon l'une des revendications précédentes, **caractérisé en ce que** la diode électroluminescente (2) est une partie d'un photocoupleur (8) ou que le circuit en série présente de manière complémentaire un photocoupleur (8) par l'intermédiaire duquel une rétroaction ou un couplage vers un système électronique d'exploitation peuvent avoir lieu.

7. Commutateur selon l'une des revendications précédentes, **caractérisé en ce que** le transistor à effet de champ (3) est conçu sous la forme d'un transistor à effet de champ à structure métal-oxyde-semi-conducteur MOSFET.

8. Commutateur selon l'une des revendications précédentes, **caractérisé en ce qu'**entre la source et le drain du transistor à effet de champ (3), est disposée une diode de protection (9), où le transistor à effet de champ (3) est conçu de telle manière qu'il contienne cette diode de protection (9).

9. Commutateur selon l'une des revendications précédentes, **caractérisé en ce que** le commutateur comprend au maximum une varistance (5), un condensateur (6), une résistance (4), un transistor à effet de champ (3), une diode électroluminescente (2), ainsi que des diodes (7) et un photocoupleur (8).

10. Installation de fusible (13), qui présente une indication de défaillance du fusible selon l'une des revendications précédentes.
